# EUROPEAN PATENT APPLICATION

(11) **EP 1 618 794 A2**
(43) Date of publication of application: **25.01.2006**
(21) Application number: 05425520.3
(22) Date of filing: 20.07.2005
(51) Int. Cl.: A23G 9/20, A23G 9/22, G01R 27/00

(54) **Method and apparatus for the production of ice cream, wherein the overrun is measured**

(30) Priority: 21.07.2004 IT MI20041475
(71) Applicant: Tekno-Ice S.r.l., 20090 Buccinasco (IT)
(72) Inventor: Colapicchioni, Sergio c/o Tekno-Ice S.r.l., 20090 Buccinasco (Milano) (IT)
(74) Representative: Vittorangeli, Lucia

(57) **Abstract**

A method for the production of ice-cream foresees the steps of: providing a flow rate of a mixture of ice-cream ingredients and an air flow rate inside the mixture of ingredients to obtain a processing compound, refrigerating the processing compound, measuring an electrical parameter of the processing compound indicating the percentage of air with respect to the compound itself, after the injection of air into the mixture of ingredients. The measured parameter is selected from a group comprising: the electrical resistivity of the processing compound, the electrical resistance of the processing compound, the impedance of the processing compound, the electrical conductivity of the processing compound. Such a method is carried out in an apparatus comprising means for measuring a parameter of the processing compound indicating the percentage of air with respect to the compound itself, after the injection of air into the mixture of ingredients.

## Description

A method and an apparatus for the production of ice-cream form the object of the present invention.

It is known that the production of ice-cream takes place starting from a mixture of ingredients to which a certain amount of air is added and emulsified. Its production is generally carried out continuously on a line into which an air flow rate is injected. The measurement of the air flow rate is generally carried out with a flowmeter arranged along the air inlet duct. Such an instrument is very precise and expensive but does not ensure that the air/ingredients mixture ratio remains constant during production. Any drawback along the production line can lead to a variation in the air/ingredient mixture ratio even if the individual flow rates are constant.

If the air/ingredient mixture ratio remains constant and precise during production it is possible to achieve high accuracy in the distribution of the portions of ice-cream ensuring the correctness of the data displayed on the label without having to overestimate in the ingredient mixture content. Indeed, in known appliances the distribution of the portions takes place through volumetric measurement whereas the indication on the label is relative to the weight contained in the portion.

On the other hand, if the air/ingredient mixture ratio is not constant and precise, it is necessary to overestimate the weight of the mixture to be sure that all of the portions correspond to the data displayed on the label. In other words, the system currently known is able to control and censure that the end weight is precise and keeps within the lower limits displayed on the label. Known appliances are thus able to avoid producing with a greater weight to remain within the limits of the label. Such excess for large productions involves a loss, i.e. and excess weight equal to about 5/10% with respect to what would be necessary to sell a product corresponding to what is declared on the label.

The problem forming the bases of the present invention is that of proposing a method and an apparatus for the production of ice-cream that have structural and functional characteristics such as to overcome the aforementioned drawbacks quoted with reference to the prior art.

Such a problem is solved through a method in accordance with claim 1 and with an apparatus in accordance with claim 14.

Further characteristics and advantages of the method and of the apparatus according to the invention shall become clear from the following description of preferred example embodiments thereof, given for indicating and not limiting purposes, with reference to the attached figures, in which:

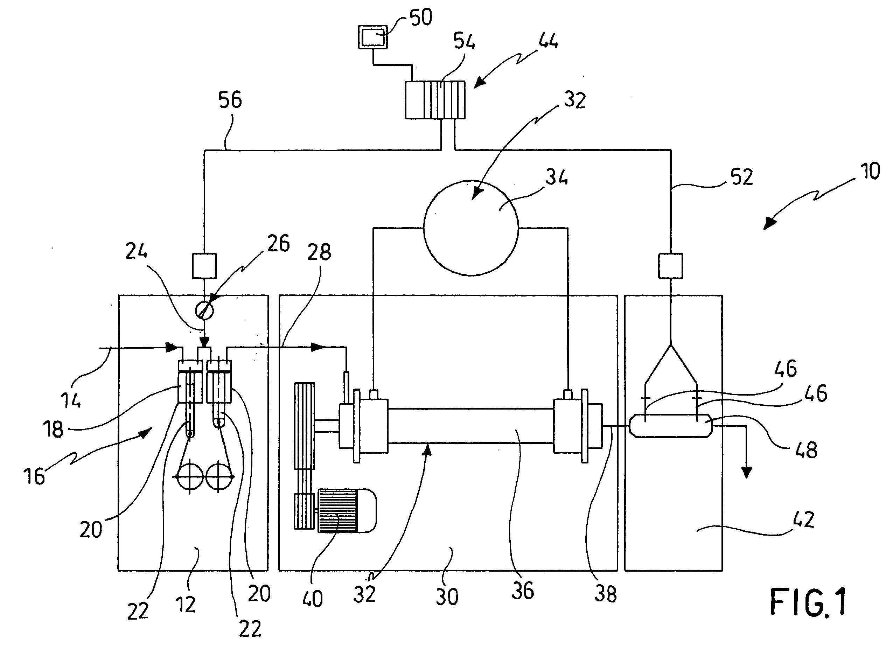

figure 1 illustrates a schematic view of an apparatus for the production of ice-cream corresponding to a scheme of steps of a method for the production of ice-cream.

With reference to the aforementioned figure, an apparatus for the production of ice-cream has been wholly indicated with 10. The same figure shows the steps of the method for the production of ice-cream according to present invention in blocks.

A measurement and feeding station of the apparatus 10 has been indicated with 12. An inlet for a mixture of ice-cream ingredients has been indicated with 14 and means for providing a flow rate of such a mixture of ice-cream ingredients have been indicated with 16. According to a possible embodiment such means also comprise a pump 18 provided with two cylinders 20 arranged in series each with a respective piston 22.

An air inlet into the measurement and feeding station and in particular into the pump 18 has been indicated with 24. Means for providing an air flow rate inside the mixture of ingredients to obtain a processing compound have been indicated with 26. An outlet for the processing compound from the measurement and feeding station 22 has been indicated with 28.

After the measurement and feeling station a product formation station 30 is foreseen comprising means 32 for refrigerating the processing compound. By the term means for refrigerating we mean means suitable for lowering the temperature of the processing compound down to a suitable temperature for the type of product and of processing.

According to a possible embodiment the means 30 for refrigerating comprise a refrigeration unit 34 operatively connected to an exchanger cylinder 36 for example with scraping blades.

The exchanger cylinder 36 receives the processing compound from the measurement and feeding station and through an outlet 38 sends it to the next station. Advantageously, a main motor that feeds the exchanger cylinder has been indicated with 40.

An inspection and feedback station for example arranged after the product formation station has been indicated with 42.

The inspection and feedback station advantageously comprises means 44 for measuring a parameter of the processing compound indicating the percentage of air with respect to the compound itself. Such measurement is carried out after the injection of air into the mixture of ingredients. Advantageously, means for measuring an electrical parameter of the processing compound indicating the percentage of air are provided.

In accordance with a possible embodiment, the parameter measured is selected from a group comprising: the electrical resistivity of the processing compound, the electrical resistance of the processing compound, the impedance of the processing compound, the electrical conductivity of the processing compound.

According to a possible embodiment the means for measuring an electrical parameter of the processing compound comprise electrodes 46 or probes in contact with the processing compound itself. In the illustrated embodiment, the means for measuring a parameter of the processing compound are positioned after the means for refrigerating the processing compound, according to the way in- which the processing compound itself advances. In accordance with a different embodiment that is not illustrated, the means for measuring a parameter of the processing compound are positioned before the means for refrigerating the processing compound, according to the way in which the processing compound itself advances.

Advantageously, a duct or a chamber 48 is provided that is suitable for receiving the processing compound and into which the electrodes 46 project.

In accordance with a possible embodiment, means for extrapolating the value of the percentage of air directly from the value of the measured parameter comparing it with reference parameters that are variable according to the ingredients and/or temperature are advantageously provided. Such a value of the percentage of air can be displayed on a display or panel 50.

Advantageously, means for comparing the measured parameter with a parameter for setting the type of ice-cream in production can be provided. In accordance with an advantageous embodiment, means for processing the variation between the measured parameter and the setting parameter and means- for generating a control signal of the air flow rate according to the value of the variation between the measured parameter and the setting parameter can also be foreseen.

Advantageously, the means for generating a control signal are operatively connected to the means for providing the air flow rate so as to modify it according to the value of the variation between the measured parameter and the setting parameter.

In the illustrated example a feedback line from the processing compound that connects the electrodes 44 or the probes to a PLC 54 for adjustment and control has been indicated with 52.

The panel 50 is operatively connected to the PLC. Such a panel can carry out the function of inputting the process data by the operator and/or can act as display means of the measured parameter.

A control signal sent by the PLC to the means for providing the air flow rate has been indicated with 56.

In the illustrated example the PLC can implement the means for extrapolating the value of the percentage of air directly from the value of the measured parameter carrying out the comparison with reference parameters that are variable according to the ingredients and/or temperature.

Advantageously, the PLC can implement the means for comparing the measured parameter with a parameter for setting the type of ice-cream in production, the means for processing the variation between the measured parameter and the setting parameter and the means for generating a control signal of the air flow rate according to the value of the variation between the measured parameter and the setting parameter.

In accordance with a different embodiment, not illustrated, means for processing the variation between the measured parameter and the setting parameter and means for generating a control signal of the flow rate of the mixture of ingredients according to the value of the variation between the measured parameter and the setting parameter can be foreseen. Advantageously, the means for generating a control signal are operatively connected to the means for providing the flow rate of the mixture of ingredients, so as to modify it according to the value of the variation between the measured parameter and the setting parameter.

Also in this different embodiment the means for processing the variation between the measured parameter and the setting parameter and the means for generating a control signal of the flow rate of the mixture of ingredients can be implemented by a PLC.

In accordance with a possible embodiment, the present invention also concerns a method for the production of ice-cream comprising the steps of:
providing a flow rate of a mixture of ice-cream ingredients,
providing an air flow rate inside the mixture of ingredients to obtain a processing compound,
refrigerating the processing compound,
measuring a parameter of the processing compound indicating the percentage of air with respect to the compound itself, after the injection of air into the mixture of ingredients.

Advantageously, an electrical parameter of the processing compound indicating the percentage of air is measured.

Such an electrical parameter is selected from a group comprising: the electrical resistivity of the processing compound, the electrical resistance of the processing compound, the impedance of the processing compound, the electrical conductivity of the processing compound.

In accordance with a possible embodiment, the step of measuring an electrical parameter of the processing compound is carried out by providing electrodes 46 or probes in contact with the processing compound itself.

Advantageously, the step of measuring a parameter of the processing compound is carried out after the step of refrigerating the processing compound. Alternatively, the step of measuring a parameter of the processing compound is carried out before the step of refrigerating the processing compound.

Advantageously, a step of displaying the measured parameter or a value indicating the amount of air in the processing compound can be provided.

In accordance with a possible embodiment, a step of extrapolating the value of the percentage of air from the value of the measured parameter comparing it with reference parameters that are variable according to the ingredients and/or temperature is provided.

According to a possible embodiment, a step of comparing the measured parameter with a parameter setting the type of ice-cream in production and preferably a subsequent processing step of the variation between the measured parameter and the setting parameter with generation of a control signal of the air flow rate according to the value of the variation between the measured parameter and the setting parameter is provided. The air flow rate is modified according to the value of the variation between the measured parameter and the setting parameter.

Alternatively, a processing step of the variation between the measured parameter and the setting parameter with generation of a control signal of the flow rate of the mixture of ingredients according to the value of the variation between the measured parameter and the setting parameter can be provided. The flow rate of the mixture of ingredients is modified according to the value of the variation between the measured parameter and the setting parameter.

Hereafter we show the description of the operation of an apparatus in accordance with the present invention.

The apparatus operates continuously with a flow rate of the mixture of ingredients that enters through the inlet 14 and crosses the pump 18. The air flow rate is injected into the pump 18 through the inlet 24. At the outlet from the pump 18 and therefore from the measurement and feeding station 12 a processing compound consisting of the mixture of ingredients and air is available.

The processing compound then crosses the production formation station 30 in which it slides along an exchanger cylinder to be refrigerated.

At the outlet from the product formation station, i.e. at the outlet from the exchanger cylinder, the processing compound crosses the chamber or duct 48 in which the electrodes 46 are arranged. Thereafter, the processing compound comes out from the apparatus.

The value measured by the electrodes is sent to the PLC along the feedback line. The PLC can extrapolate the value of the percentage of air from the value of the measured parameter comparing it with reference parameters that are variable according to the ingredients and/or temperature. The value of the percentage of air can be simply represented on the panel 50.

Advantageously, the PLC can carry out a control step of the air flow rate according to the measured parameter. For example, the PLC proceeds to compare the measured parameter with a parameter setting the type of ice-cream in production and processes the variation between the measured parameter and the setting parameter with the generation of a control signal of the air flow rate according to the value of the variation between the measured parameter and the setting parameter.

From what has been stated above it can be appreciated how providing a method and an apparatus for the production of ice-cream according to the present invention allows the ratio between the mixture of ingredients and the air on the processing compound to be evaluated instead of estimating it upstream. Such a measurement allows a feedback test preferably of the amount of air injected to be carried out ensuring a better constancy of the ratio between the mixture of ingredients and the air.

By ensuring higher accuracy of the end result, it is possible to avoid excesses in the flow rate of the mixture of ingredients and in any case to obtain portions that respect the minimum content indicated on the label. The measurement of the amount of air downstream of the measurement and feeding station allows effective verification that also takes into account possible malfunctions of the apparatus as well as the possibility of correction preferably modifying the air flow rate.

A further advantage of the apparatus and of the method according to the invention lies in the unusual structural simplicity allowing it to be made at a very low cost.

A man skilled in the art can make numerous modifications, adaptations and replacements of elements with other functionally equivalent ones to the preferred solution of the apparatus and of the method described above, in order to satisfy contingent and specific requirements, without however departing from the scope of the following claims.

## Claims

1. Method for the production of ice-cream comprising the steps of:
providing a flow rate of a mixture of ice-cream ingredients,
providing an air flow rate inside the mixture of ingredients to obtain a processing compound,
refrigerating the processing compound,
measuring a parameter of the processing compound indicating the percentage of air with respect to the compound itself, after the injection of air into the mixture of ingredients.

2. Method according to claim 1, wherein an electrical parameter of the processing compound indicating the percentage of air is measured.

3. Method according to claim 2, wherein the measured parameter is selected from a group comprising: the electrical resistivity of the processing compound, the electrical resistance of the processing compound, the impedance of the processing compound, the electrical conductivity of the processing compound.

4. Method according to claim 2 or 3, wherein the step of measuring an electrical parameter of the processing compound is carried out by providing electrodes (46) or probes in contact with the processing compound itself.

5. Method according to one of the previous claims, wherein the step of measuring a parameter of the processing compound is carried out after the step of refrigerating the processing compound.

6. Method according to one of claims 1 to 4, wherein the step of measuring a parameter of the processing compound is carried out before the step of refrigerating the processing compound.

7. Method according to one of the previous claims, wherein a step of displaying the measured parameter is also provided.

8. Method according to one of the previous claims, wherein a step of extrapolating the value of the percentage of air from the value of the measured parameter comparing it with reference parameters that are variable according to the ingredients and/or temperature is also provided.

9. Method according to one of the previous claims, wherein a step of comparing the measured parameter with a parameter setting the type of ice-cream in production is also provided.

10. Method according to claim 9, wherein a step of processing the variation between the measured parameter and the setting parameter with generation of a control signal of the air flow rate according to the value of the variation between the measured parameter and the setting parameter is also provided.

11. Method according to claim 10, wherein the air flow rate is modified according to the value of the variation between the measured parameter and the setting parameter.

12. Method according to claim 9, wherein a step of processing the variation between the measured parameter and the setting parameter with generation of a control signal of the flow rate of the mixture of ingredients according to the value of the variation between the measured parameter and the setting parameter is also provided.

13. Method according to claim 12, wherein the flow rate of the mixture of ingredients is modified according to the value of the variation between the measured parameter and the setting parameter.

14. Apparatus (10) for the production of ice-cream comprising:
means (16) for providing a flow rate of a mixture of ice-cream ingredients,
means (26) for providing an air flow rate inside the mixture of ingredients to obtain a processing compound,
means (32) for refrigerating the processing compound,
means (44) for measuring a parameter of the processing compound indicating the percentage of air with respect to the compound itself, after the injection of air into the mixture of ingredients.

15. Apparatus according to claim 14, comprising means for measuring an electrical parameter of the processing compound indicating the percentage of air.

16. Apparatus according to claim 15, wherein the measured parameter is selected from a group comprising: the electrical resistivity of the processing compound, the electrical resistance of the processing compound, the impedance of the processing compound, the electrical conductivity of the processing compound.

17. Apparatus according to claim 15 or 16, wherein said means for measuring an electrical parameter of the processing compound comprise electrodes (46) or probes in contact with the processing compound itself.

18. Apparatus according to one of claims 14 to 17, wherein said means for measuring a parameter of the processing compound are positioned after the means for refrigerating the processing compound, according to the way in which the processing compound itself advances.

19. Apparatus according to one of claims 14 to 17, wherein said means for measuring a parameter of the processing compound are positioned before the means for refrigerating the processing compound, according to the way in which the processing compound itself advances.

20. Apparatus according to one of claims 14 to 19, wherein display means (50) of the measured parameter are also provided.

21. Apparatus according to one of claims 14 to 20, wherein means (54) for extrapolating the value of the percentage of air from the value of the measured parameter comparing it with reference parameters that are variable according to the ingredients and/or the temperature are also provided.

22. Apparatus according to one of claims 14 to 21, wherein means (54) for comparing the measured parameter with a parameter setting the type of ice-cream in production are also provided.

23. Apparatus according to claim 22, wherein means (54) for processing the variation between the measured parameter and the setting parameter and means (54) for generating a control signal (56) of the air flow rate according to the value of the variation between the measured parameter and the setting parameter are also provided.

24. Apparatus according to claim 23, wherein said means for generating a control signal are operatively connected to the means for providing the air flow rate so as to modify it according to the value of the variation between the measured parameter and the setting parameter.

25. Apparatus according to claim 22, wherein means for processing the variation between the measured parameter and the setting parameter and means for generating a control signal of the flow rate of the mixture of ingredients according to the value of the variation between the measured parameter and the setting parameter are also provided.

26. Apparatus according to claim 25, wherein said means for generating a control signal are operatively connected to the means for providing the flow rate of the mixture of ingredients, so as to modify it according to the value of the variation between the measured parameter and the setting parameter.
